# EUROPEAN PATENT SPECIFICATION

(11) **EP 0 462 083 B1**
(45) Date of publication and mention of the grant of the patent: **28.12.1994**
(21) Application number: 91830264.7
(22) Date of filing: 14.06.1991
(51) Int. Cl.: B65G 65/00, B65G 47/61

(54) **A device for loading and unloading hams, cooked meat moulds or other meat products automatically onto and from mobile hangers or similar equipment**
Vorrichtung zum automatischen Be- bzw. Entladen von Hängeförderern oder dergleichen mit Fleischprodukten
Dispositif pour charger ou décharger de la boucherie-charcuterie de convoyeurs suspendus ou analogues

(30) Priority: 15.06.1990 IT 4251790
(43) Date of publication of application: 18.12.1991
(73) Proprietor: GAMMA MECCANICA S.R.L., I-42021 Bibbiano (Reggio Emilia) (IT)
(72) Inventor: Reverberi, Roberto, I-43038 Sala Baganza, Parma (IT)
(74) Representative: Lanzoni, Luciano

(56) References cited:
- DE-A- 1 953 270
- DE-A- 3 444 093
- DE-B- 1 172 607
- FR-A- 2 602 119
- US-A- 2 718 972

## Description

The present invention relates to a device by means of which to load and unload cured hams, cooked meat moulds or other meat products automatically onto and from monorail hangers or similar equipment (see FR-A-2 602 119).

Conventionally, these loading/unloading operations are effected either manually, or alternatively, using automatic devices by means of which the hams are transferred from stock onto trays, carried by the hangers, or from the trays into stock.

Such devices are provided with transfer surfaces capable of movement in both vertical and horizontal directions, and with gripping and pushing means by which the hams are transferred first from a loading station onto the surfaces, then from the transfer surfaces to the trays (or in the reverse direction, if the trays are being unloaded).

Devices of the type further comprise means by which to rotate each hanger about its vertical centre axis in such a way as to optimize the position of the hams on the trays.

The hams will be arranged in two rows of three, for example, with the hock directed toward the middle of the tray and the thigh outermost.

The conventional devices in question are especially complex in construction however, by reason of the fact that the hams are transferred from stock to trays (or viceversa) in a plurality of successive steps by several mechanical linkages.

Furthermore, such devices rely for their operation on the existence of means for rotating the hangers, which render both the device and the entire stock handling system generally more complex.

An additional drawback of the conventional devices thus outlined is reflected in their slowness, hence their limited handling potential.

The object of the present invention is to overcome the drawbacks mentioned above, and in particular to provide a device by which cured hams, cooked meat moulds or other meat products can be loaded and unloaded automatically onto and from mobile hangers utilizing means of simple and therefore inexpensive construction, and with greater precision and speed in handling than is obtainable conventionally.

The stated object is fully realized in an automatic loading and unloading device according to the present invention, which is characterized in that it comprises:
- a reversible conveyor belt by which hams, moulds or other meat products are transferred either from the trays or shelves of a hanger to an unloading station, or from a loading station to the trays or shelves of a hanger;
- means by which the conveyor belt can be traversed vertically in either direction;
- means by which the conveyor belt can be traversed along the direction of its own longitudinal axis, hence concurrently with the direction of rotation of the belt;
- means by which to sense the position of the single hangers, and of a plurality of trays or shelves that may be laden or unladen and spaced apart at any given distance;
- means by which to align the single hangers with the device.

The invention will now be described in detail, by way of example, with the aid of the accompanying drawings, in which:

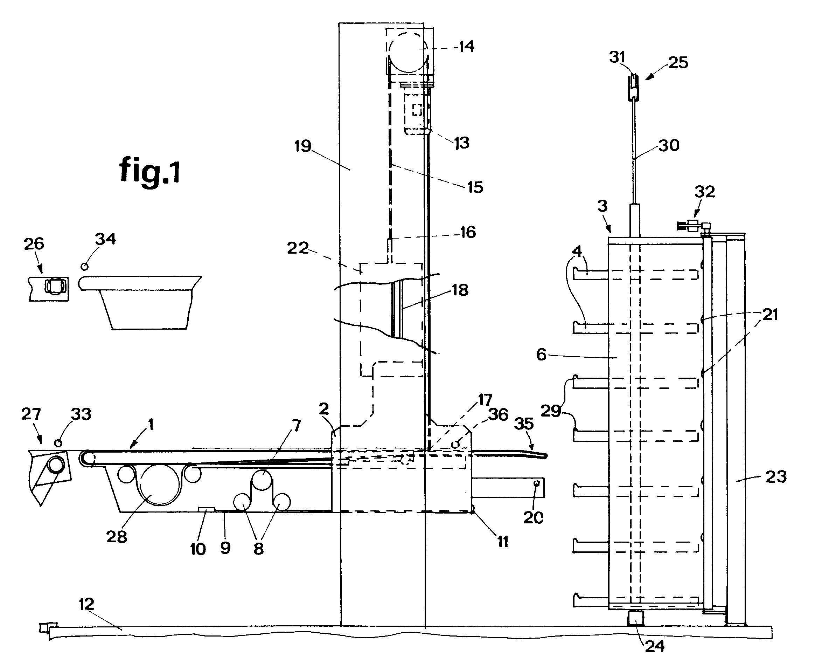

- fig 1 is a schematic representation of the device in its entirety, viewed in side elevation;

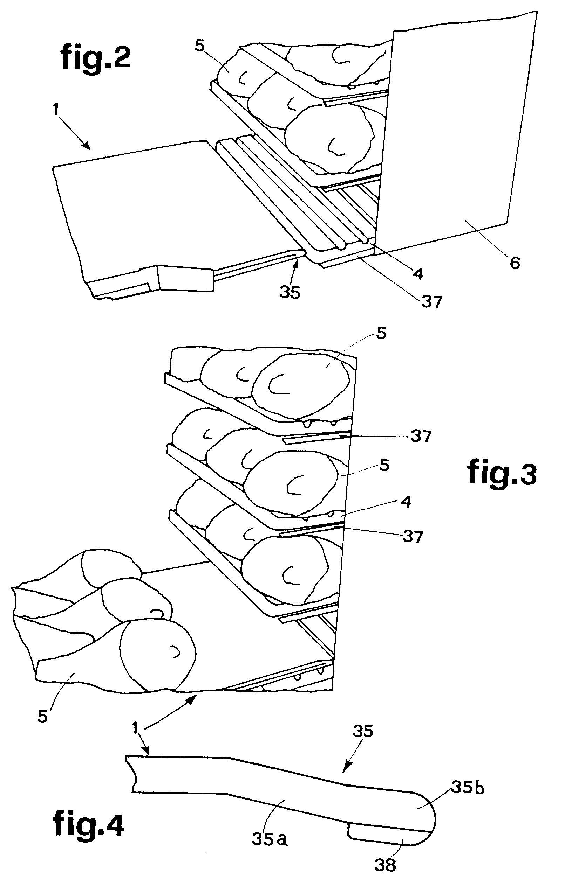

- fig 2 and 3 are perspectives illustrating two successive steps in the operation of the device;
- fig 4 is a side elevation illustrating the profile of the conveyor belt at the end positioned over the trays, or over the shelves.

Referring now to the drawings, 1 denotes a conveyor belt capable of rotation in two directions, which is mounted to a slidable moving frame 2.

The belt 1 is set in rotation by a power driven wheel denoted 28.

The conveyor belt 1 and the frame 2 are capable of being traversed vertically, in both directions, by a drive system consisting in a geared motor 13 and a sprocket 14 in mesh with a chain 15. One end 17 of the chain 15 is fastened to the moving frame 2, and the remaining end 16 to a counterweight 22 the function of which is to facilitate the ascent and descent of the conveyor between lateral guides 18 afforded by corresponding uprights 19.

The motor 13, the sprocket 14, the chain 15 and the counterweight 22, together with the guides 18 and uprights 19, constitute means by which the conveyor belt is traversed vertically in either direction.

7 denotes a power driven sprocket supported by the fixed frame 12 of the device which, in combination with a pair of sprockets denoted 8, serves to drive a further chain 9 anchored by each end 10 and 11 to the moving frame 2; thus, the sprockets 7 and 8 and the chain 9 constitute means by which the conveyor belt 1 can be traversed along its own longitudinal axis, i.e. concurrently with rotation of the belt.

3 denotes a mobile hanger, in its entirety, which is equipped with a plurality of trays 4 resting on shelves 37 and serving to accommodate the hams 5, moulds or meat products being handled.

The system 25 whereby the hangers are manoeuvred around a stock room or warehouse is of conventional embodiment, with an overhead rail and cable drive; more exactly, each hanger 3 is provided uppermost with a supporting rod 30, attached by the top end to a wheel 31 running on the rail.

23 denotes one of two uprights rigidly associated with the fixed frame 12 of the device, each one of which affords support to a side panel or flap 6 hinged by one vertical corner and capable thus of pivoting movement brought about by a pneumatic cylinder 32.

24 denotes a wedge or block by which the hanger is raised marginally and disengaged from the cable drive, in such a way as to bring the trays as near horizontal as possible.

The uprights 23, flaps 6, pneumatic cylinders 32 and wedge 24 together constitute means by which to align the single hangers 3 with the loading and unloading device. During the operation of loading or unloading a hanger, in fact, the flaps 6 will hold the shelves in alignment with the device, and more especially with the conveyor belt 1.

The hams 5 (or whatever meat products) may be transferred initially to the belt from a loading station 27, equipped with a sensor 33 allowing or disallowing entry to the belt 1, then from the belt to the tray 4,or alternatively, transfer may occur in the opposite direction, i.e. from the trays to the belt, then to an unloading station 26, equipped in this instance with a sensor 34 controlling the operation of the belt.

One end 35 of the conveyor belt 1 is shaped in such a way that it can be positioned over the single trays 4 of the hanger 3, in effect, above a tray positioned in alignment with and substantially at the same height as the belt, to the end of picking up or depositing a plurality of the hams or meat products.

The end 35 of the belt in question incorporates a ramp portion 35a, and a tip portion 35b, inclined at an angle shallower than that of the ramp and terminating in a plate 38 on the underside which serves to prevent damage to the belt.

20 and 21 denote pluralities of photoemitters and photoreceivers, respectively, the former rigidly associated with the moving frame 2, the latter mounted to a vertical wall disposed substantially perpendicular to the plane occupied by the conveyor belt, between the two uprights 23; these constitute means by which to sense the position of the hangers and the trays 4, laden with products or unladen, and independently of the positions of the trays or shelves themselves one in relation to another.

In effect, the sensing means permit of positioning the conveyor belt automatically in aligment with an empty tray, when loading the hanger, or with a full tray when unloading.

36 denotes a sensor by means of which to stop the flow of hams (or other products) during the loading operation, thereby allowing the belt to position itself with the angled end 35 over the tray, beyond a raised lip 29 with which each of the trays 4 is provided; thereafter, the conveyor belt is again set in motion and the hams, arranged in two rows of three with the hocks directed inwards and the thigh ends outwards, are carried toward the tray 4 of the hanger to be loaded.

To transfer hams from the loading station 27 to a hanger 3, the conveyor belt 1 is positioned at a height marginally above that of the top shelf, then descending, proceeds to seek out a vacant shelf by means of the photo emitters 20 and receivers 21, whereupon the belt begins turning in the transfer direction while traversing bodily with the moving frame 2 toward the hanger at the same time.

The belt ceases turning long enough for the angled end 35 to position itself over the tray, and then restarts; the hams 5 now run off the belt onto the tray, while the moving frame 2 begins to distance itself from the hanger, thus ensuring that the hams are deposited sweetly and without striking against one another.

The speed at which the conveyor belt turns will be constant, whilst the velocity at which it traverses together with the moving frame 2 is variable.

The foregoing description implies no limitation; for example, whilst reference is made effectively to the loading and unloading of cured hams, the device clearly might be used to equal advantage in filling and emptying hangers with moulds containing boiled ham or shoulder cuts, in which case there would be no trays utilized, the moulds instead resting directly on the shelves 37 of the hanger.

Similarly, whilst specific reference is made to the loading or unloading of hams in formations of six, the number obviously might vary according to the dimensions of the shelf and the size of the ham or other meat product.

## Claims

1. A device for loading and unloading cured hams, cooked meat moulds or other meat products onto and from mobile hangers automatically,
characterized
in that it comprises:
- a reversible conveyor belt (1) by which the hams (5), moulds or meat products are transferred either from the trays (4) or shelves (37) of a hanger (3) to an unloading station (26), or from a loading station (27) to the trays or shelves of a hanger;
- means by which the conveyor belt can be traversed vertically in either direction;
- means by which the conveyor belt can be traversed along the direction of its own longitudinal axis, hence concurrently with the direction of rotation of the belt;
- means by which to sense the position of the single hangers (3), and of a plurality of trays (4) or shelves (37) that may be laden or unladen and spaced apart at any given distance;
- means by which to align the single hangers (3) with the device.

2. A device as in claim 1, wherein the conveyor belt (1) is mounted to a moving frame (2) and embodied with one end (35) shaped in such a way as to allow of being positioned over the single trays (4) or shelves (37) of a hanger (3) to the end of picking up or depositing a plurality of hams (5), moulds or meat products in one transfer operation.

3. A device as in claim 2, wherein the shaped end (35) of the conveyor belt (1) comprises a ramp portion (35a), and a tip portion (35b) inclined at an angle shallower than that of the ramp portion and terminating in a plate (38) on the underside that serves to prevent damage to the belt.

4. A device as in claim 1, wherein the conveyor belt (1) is mounted to a moving frame (2), and means by which the belt is traversed vertically in either direction comprise a geared motor (13) driving a sprocket (14) in mesh with a chain (15) of which one end (17) is anchored to the moving frame (2), and the remaining end (16) to a counterweight (22), in such a way that rotation of the sprocket (14) causes the moving frame (2) to ascend or descend vertically between two lateral guides (18) afforded by corresponding uprights (19).

5. A device as in claim 1, wherein means by which the conveyor belt (1 ) is traversed along the direction of its own longitudinal axis, concurrent with the direction of rotation of the belt, comprise a power driven sprocket (7) mounted to the fixed frame (12) of the device, and a pair of further sprockets (8), in mesh with a chain (9) of which the two opposite ends (10, 11) are anchored at points on a moving frame (2) to which the conveyor belt is mounted.

6. A device as in claim 1, wherein means by which to sense the position of the single hangers (3) and of a plurality of trays (4) or shelves (37) laden with hams, moulds or other meat products, or unladen, comprise a plurality of photoemitters (20) rigidly associated with a moving frame (2) to which the conveyor belt (1) is mounted, and a plurality of photoreceivers (21) mounted to a vertical wall disposed substantially perpendicular to the plane occupied by the surface of the conveyor belt (1).

7. A device as in claim 1, wherein means by which to align the hangers (3) with the device comprise: a pair of side panels or flaps (6), each hinged about one vertical corner to a corresponding upright (23) rigidly associated with the fixed frame (12) of the device and capable thus of pivoting motion brought about by means of a pneumatic cylinder (32), in such a way that a single hanger (3) to be loaded or unloaded can be accommodated between the two flaps (6); and a wedge or block (24) serving to raise the hanger marginally and bring about its disengagement from an overhead cable drive system (25), and to bring the trays (4) or shelves (37) of the hanger into a substantially horizontal position.

## Patentansprüche

1. Eine Vorrichtung zum automatischen Be- und Entladen von Hängeförderern oder dergleichen mit Fleischprodukten, dadurch gekennzeichnet, daß sie umfaßt:
- ein umschaltbares Förderband (1), von dem Schinken (5), Formen oder Fleisch in von dem Hängeförderer (4) getragenen Tabletts (4) oder Regalen (37) zu einer Entladestation (26) oder von einer Beladestation (27) zu den Tabletts oder Regalen des Hängeförderers transportiert werden;
- eine Vorrichtung zur vertikalen Verschiebung des Förderbands in beide Bewegungsrichtungen;
- eine Vorrichtung zur Verschiebung des Förderbands in Richtung seiner Längsachse, die mit der Rotationsrichtung des Bands zusammenfällt;
- eine Vorrichtung zur Aufnahme der Position der einzelnen Hängeförderer (3) und der Vielzahl von Tabletts (4) oder von Regalen (37), die unabhängig von ihrem Abstand voneinander be- oder unbeladen sein können;
- eine Vorrichtung zur Ausrichtung der einzelnen Hängeförderer mit der Anlage.

2. Eine Anlage gemäß Anspruch 1), wobei das Förderband (1) an einem beweglichen Rahmen (2) angebracht wird und wobei ein Ende (35) derart gestaltet ist, daß es über den einzelnen Tabletts (4) oder Regalen (37) des Hängeförderers (3) ausgerichtet werden kann, um eine Vielzahl von Schinken (5), Formen oder Fleischprodukten in einem Arbeitsgang aufzunehmen oder abzulegen.

3. Eine Anlage gemäß Anspruch 2), wobei das gestaltete Ende (35) des Förderbands (1) einen Rampenteil (35a) und einen Spitzenteil (35b) aufweist, welcher weniger geneigt ist als der Rampenteil und in einer Platte (38) auf der Unterseite endet, die zur Vermeidung von Beschädigungen des Bands dient.

4. Eine Anlage gemäß Anspruch 1), wobei das Förderband (1) an einem beweglichen Rahmen (2) angebracht wird und wobei die Vorrichtung zur vertikalen Verschiebung des Bands in beide Richtungen mit einem Getriebemotor (13) ausgestattet ist, der ein Zahnrad (14) antreibt, welches in eine Kette (15) eingreift, wovon ein Ende (17) an dem beweglichen Rahmen 82) und das andere Ende (16) an einem Gegengewicht (22) gefestigt ist, so daß die Bewegung des Zahnrads (14) die vertikale Auf- und Abbewegung des Rahmens (2) entlang zweier seitlicher Führungen (18) bewirkt, die die entsprechenden Träger (19) aufweisen.

5. Eine Anlage gemäß Anspruch 1), wobei die Vorrichtung, die das Förderband (1) in Richtung seiner Längsachse, die mit der Rotationsrichtung des Bands zusammenfällt, verschiebt, ein angetriebenes Zahnrad (7) aufweist, das am festen Rahmen der Anlage befestigt ist, und ein Paar weiterer Zahnräder (8), die in eine Kette (9) eingreifen, deren einander entgegengesetzte Enden (10, 11) an Punkten eines beweglichen Rahmen (2) befestigt sind, an dem das Förderband befestigt ist.

6. Eine Anlage gemäß Anspruch 1), wobei die Vorrichtung zur Aufnahmen der Position der einzelnen Hängeförderer und der Vielzahl von mit Schinken, Formen oder anderen Fleischprodukten beladenen oder unbeladenen Tabletts (4) oder Regalen (37) eine Vielzahl von Photostrahlern (20) aufweist, die an dem beweglichen Rahmen (2), an dem das Förderband angebracht ist, fest angebracht sind, und eine Vielzahl von Photoempfängern (21), die auf einer vertikalen Wand angebracht sind, die im wesentlichen senkrecht zur der Ebene steht, die die Oberfläche des Förderbands (1) bildet.

7. Eine Anlage gemäß Anspruch 1), wobei die Vorrichtung zur Ausrichtung der Hängeförderer (3) mit der Anlage umfaßt: ein Paar seitlicher Wände oder Klappen (6), die sich jeweils durch einen Pneumatikzylinder (32) um ihre vertikale Kante drehen können, die an einem entsprechenden Träger (23) am festen Rahmen (12) derart befestigt sind, daß die beiden seitlichen Wände (6) einen zu be- oder entladenden Hängeförderer zwischen sich einschließen; und einen Keil oder Anschlag (24), um den Hängeförderer (3) anzuheben, aus einem Seilzugantriebssystem (25) auszuklinken und die Tabletts (4) oder Regale (37) des Hängeförderers in eine in wesentlichen horizontale Position zu bringen.

## Revendications

1. Un dispositif pour charger et décharger automatiquement de la boucherie-charcuterie de convoyeurs suspendus,
caractérisé
en ce fait qu'il comprend:
- un transporteur à bande réversible (1) par lequel les jambons (5), les pièces de charcuterie ou de boucherie sont transférés, soit à partir des plateaux (4) ou des étagères (37) d'un convoyeur suspendu (3) vers une station de déchargement (26), soit à partir d'une station de chargement (27) vers les plateaux ou les étagères d'un convoyeur suspendu;
- des moyens par lesquels le transporteur à bande peut être charioté verticalement dans l'une ou l'autre direction;
- des moyens par lesquels le transporteur a bande peut être charioté suivant la direction de son propre axe longitudinal, en conséquence concurremment avec la direction de rotation de la bande;
- des moyens servant à relever la position de chacun des convoyeurs suspendus (3), et d'une pluralité de plateaux (4) ou d'étagères (37) qui peuvent être chargés ou non et qui peuvent être séparés l'un de l'autre par n'importe quelle distance donnée;
- des moyens servant à aligner chacun des convoyeurs suspendus (3) avec le dispositif.

2. un dispositif comme celui de la revendication 1, dans lequel le transporteur à bande (1) est monté sur une structure mobile (2) et est réalisé avec une de ses extrémités (35) modelée de façon telle qu'elle puisse être positionnée au-dessus de chacun des plateaux (4) ou de chacune des étagères (37) d'un convoyeur suspendu (3) dans le but de prendre ou de déposer une pluralité de jambons (5), de pièces de charcuterie ou de boucherie dans une opération de transfert.

3. Un dispositif comme celui de la revendication 2, dans lequel l extrémité modelée (35) du transporteur à bande (1) comprend une partie en pente (35a), et une partie de déchargement (35b) inclinée suivant un angle plus faible que celui de la partie en pente et qui termine par une plaque (38) placée dessous qui sert à empêcher que la bande ne soit abîmée.

4. Un dispositif comme celui de la revendication 1, dans lequel le transporteur à bande (1) est monté sur une structure mobile (2) et les moyens par lesquels la bande est chariotée verticalement dans l'une ou l'autre direction comprennent un moteur à train d'engrenage (13) qui commande un pignon (14) en prise avec une chaîne (15) dont une des extrémités (17) est ancrée à la structure mobile (2), et l'autre extrémité (16) à un contrepoids (22), de telle sorte que la rotation du pignon (14) pousse la structure mobile (2) à monter ou à descendre verticalement entre deux guides latéraux (18) fournis par des montants correspondants (19).

5. Un dispositif comme celui de la revendication 1, dans lequel les moyens par lesquels le transporteur à bande (1) est charioté suivant la direction de son propre axe longitudinal, concourant avec la direction de rotation de la bande, comprennent un pignon à propulsion mécanique (7) monté sur la structure fixe (12) du dispositif, et une paire de pignons supplémentaires (8), en prise avec une chaîne (9) dont les deux extrémités opposées (10, 11) sont ancrées en quelques points sur une structure mobile (2) sur laquelle le transporteur à bande est monté.

6. Un dispositif comme celui de la revendication 1, dans lequel les moyens servant à relever la position de chacun des convoyeurs suspendus (3) et d'une pluralité de plateaux (4) ou d'étagères (37) chargés ou non de jambons, de pièces de charcuterie ou de boucherie, comprennent une pluralité d'émetteurs photoélectriques (20) rigidement associés avec une structure mobile (2) sur laquelle le transporteur à bande (1) est monté, et une pluralité de récepteurs photoélectriques (21) montés sur une paroi verticale disposée en substance perpendiculairement au plan qui est occupé par la surface du transporteur à bande (1).

7. Un dispositif comme celui de la revendication 1, dans lequel les moyens servant à aligner les convoyeurs suspendus (3) avec le dispositif comprennent: une paire de panneaux latéraux ou de battants (6), chacun étant articulé autour d'un coin vertical à un montant correspondant (23) rigidement associé avec la structure fixe (12) du dispositif et capable ainsi d'un mouvement pivotant provoqué au moyen d'un cylindre pneumatique (32) de façon telle qu'un seul convoyeur suspendu (3) devant être chargé ou déchargé puisse être placé entre les deux battants (6); et une cale ou un bloc (24) qui sert à soulever légèrement le convoyeur suspendu et à provoquer son dégagement d'un système de commande par cable aérien (25), et à porter les plateaux (4) ou les étagères (37) du convoyeur suspendu dans une position en substance horizontale.
